(19)

Europäisches
Patentamt
European
Patent Office
Office européen
des brevets

(11) **EP 4 130 652 A1**

(12) **EUROPEAN PATENT APPLICATION**
published in accordance with Art. 153(4) EPC

(43) Date of publication:
**08.02.2023 Bulletin 2023/06**

(21) Application number: **21778884.3**

(22) Date of filing: **16.02.2021**

(51) International Patent Classification (IPC):
***G01B 11/24*** (1968.09)      ***G01B 11/26*** (1968.09)

(52) Cooperative Patent Classification (CPC):
**G01B 11/24; G01B 11/26**

(86) International application number:
**PCT/JP2021/005742**

(87) International publication number:
**WO 2021/199744 (07.10.2021 Gazette 2021/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **03.04.2020 JP 2020067655**

(71) Applicant: **Xtia Ltd**
**Tokyo, 140-0002 (JP)**

(72) Inventor: **MURAKI Yosuke**
**Tokyo 140-0002 (JP)**

(74) Representative: **Isarpatent**
**Patent- und Rechtsanwälte Barth**
**Charles Hassa Peckmann & Partner mbB**
**Friedrichstrasse 31**
**80801 München (DE)**

(54) **MEASUREMENT DEVICE, MEASUREMENT METHOD, AND PROGRAM**

(57)    In one embodiment of the present invention, a measurement device is provided. The measurement device comprises a guide light source unit, an imaging unit, and a measurement unit. The guide light source unit is configured to output guide light and to continuously irradiate a measurement surface at a plurality of measurement reference points with said guide light. The measurement reference points are each at one end of the distance between two points to the measurement surface. The imaging unit is configured so as to capture a spot of guide light at the measurement surface at a first measurement reference point. The measurement unit is configured to calculate the slope of the measurement surface on the basis of the shape of the captured spot, and to calculate the depth of a second measurement reference point at an instance following the first measurement reference point on the basis of the calculation of the slope.

【FIG. 3】

## Description

TECHNICAL FIELD

The present invention relates to a measurement apparatus, a measurement method and a program.

RELATED ART

Optical measurement apparatus is used for measuring a surface shape of an object to be measured without contact.

Patent document 1 discloses a technique for non-contact measurement of complex surface shape, in which a triangulation method is used to measure a distance to each measurement point by allowing a laser light source to move perpendicular to the surface shape, so as to obtain three-dimensional coordinate data of the surface shape.

PRIOR ART DOCUMENTS

Patent Document

[Patent Document 1] Patent Application Publication No. H05-231832

SUMMARY OF INVENTION

Problems to be Solved by Invention

However, with the measurement apparatus disclosed in Patent Document 1, it is difficult to obtain an accurate inclination angle of the surface shape when the object to be measured has irregularities or discontinuities in the surface shape. Therefore, sufficient measurement cannot be performed.

Means for Solving Problems

According to an aspect of the present invention, a measurement apparatus is provided. The measurement apparatus comprises a guide light source unit, an imaging unit, and a measurement unit. The guide light source unit is configured to output a guide light and continuously irradiate the guide light to a measurement surface of a plurality of measurement reference points. The measurement reference point is one end of a distance between two points to the measurement surface. The imaging unit is configured to image a spot of the guide light at the measurement surface of a first measurement reference point. The measurement unit is configured to calculate an inclination of the measurement surface based on shape of the imaged spot, and based on the inclination, to calculate a depth of a second measurement reference point corresponding to a next order of the first measurement reference point.

According to such a measurement apparatus, it is possible to accurately measure an object to be measured having a complicated shape.

BRIEF DESCRIPTION OF DRAWINGS

FIG. 1 is an overall configuration diagram of a measurement apparatus 1.
FIG. 2 shows an example of a spot shape SP of a guide light.
FIG. 3 shows a measurement reference point MB and a measurement surface 7 of an object to be measured.
FIG. 4 shows an aspect of an object to be measured having an inclination θy around Y-axis, and FIG. 4A to FIG. 4C are a plan view, a front view, and a side view, respectively.
FIG. 5 shows an aspect of an object to be measured having an inclination θx around X-axis and an inclination θy around Y-axis, and FIG. 5A to FIG. 5C are a plan view, a front view, and a side view, respectively.
FIG. 6 is a block diagram showing a hardware configuration of the measurement apparatus 1.
FIG. 7 is a block diagram showing a hardware configuration of an information processing apparatus 3.
FIG. 8 is a functional block diagram showing a function performed by a controller 33 in the information processing apparatus 3.
FIG. 9 shows an example of the spot shape SP of an imaged guide light.
FIG. 10 shows an example of reference data relating to the spot shape SP.
FIG. 11 shows a method for calculating an inclination of the measurement surface 7 based on an inverse transformation formula of projective transformation.
FIG. 12 is an activity diagram of a method for calculating an inclination of the measurement surface 7 according to an embodiment.
FIG. 13 is an activity diagram of a method for calculating a distance to the measurement surface 7 according to an embodiment.
FIG. 14 is an overall configuration diagram of a measurement apparatus 1 according to a second embodiment.
FIG. 15 is a block diagram showing a hardware configuration of the measurement apparatus 1 according to the second embodiment.
FIG. 16 is a functional block diagram showing a function performed by the controller 33 in the information processing apparatus 3 according to the second embodiment.
FIG. 17 is a schematic diagram showing an example of a two-dimensional lookup table TL used for luminosity setting of a measurement light in the second embodiment.

DETAILED DESCRIPTION

Hereinafter, embodiments of the present invention will be described with reference to the drawings. Various features described in the embodiment below can be combined with each other.

A program for realizing a software in the present embodiment may be provided as a non-transitory computer readable medium that can be read by a computer or may be provided for download from an external server or may be provided so that the program can be activated on an external computer to realize functions thereof on a client terminal (so-called cloud computing).

In the present embodiment, the "unit" may include, for instance, a combination of hardware resources implemented by a circuit in a broad sense and information processing of software that can be concretely realized by these hardware resources. Further, various information is performed in the present embodiment, and the information can be represented by, for instance, physical values of signal values representing voltage and current, high and low signal values as a set of binary bits consisting of 0 or 1, or quantum superposition (so-called qubits), and communication/calculation can be performed on a circuit in a broad sense.

Further, the circuit in a broad sense is a circuit realized by combining at least an appropriate number of a circuit, a circuitry, a processor, a memory, and the like. In other words, it is a circuit includes application specific integrated circuit (ASIC), programmable logic device (e.g., simple programmable logic device (SPLD), complex programmable logic device (CPLD), and field programmable gate array (FPGA)), and the like.

1. Overall configuration of first embodiment

In section 1, an overall configuration of a first embodiment will be described in order.

1.1 Measurement apparatus 1

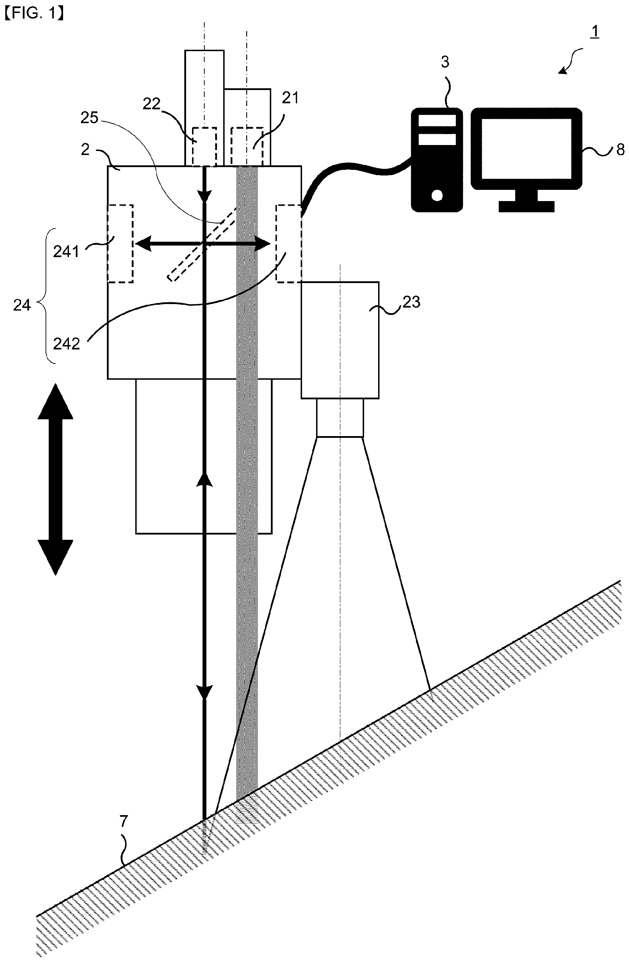

In this section, a measurement apparatus according to the first embodiment will be described. FIG. 1 is an overall configuration diagram of a measurement apparatus 1. As shown in FIG. 1, the measurement apparatus 1 comprises a measurement unit 2, an information processing apparatus 3, and a display apparatus 8. The measurement apparatus 1 performs a three-dimensional measurement of a measurement surface 7 of an object to be measured without contact. The information processing apparatus 3 is electrically connected to the measurement unit 2 to enable input of detection signal of a light detection unit 24. Hereinafter, each component will be described in further detail.

1.2 Measurement unit 2

The measurement unit 2 comprises a guide light source unit 21, a measurement light source unit 22, an imaging unit 23, a light detection unit 24, and a beam splitter 25. The measurement unit 2 is provided on an XY stage (not shown), a hand of a Cartesian coordinate type robot (not shown), or the like, and performs a non-contact three-dimensional measurement of an object to be measured.

(Guide light source unit 21)

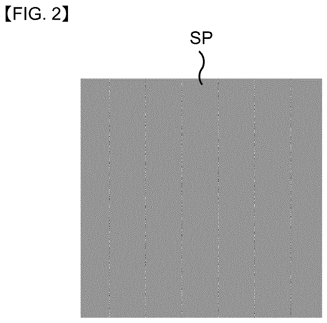

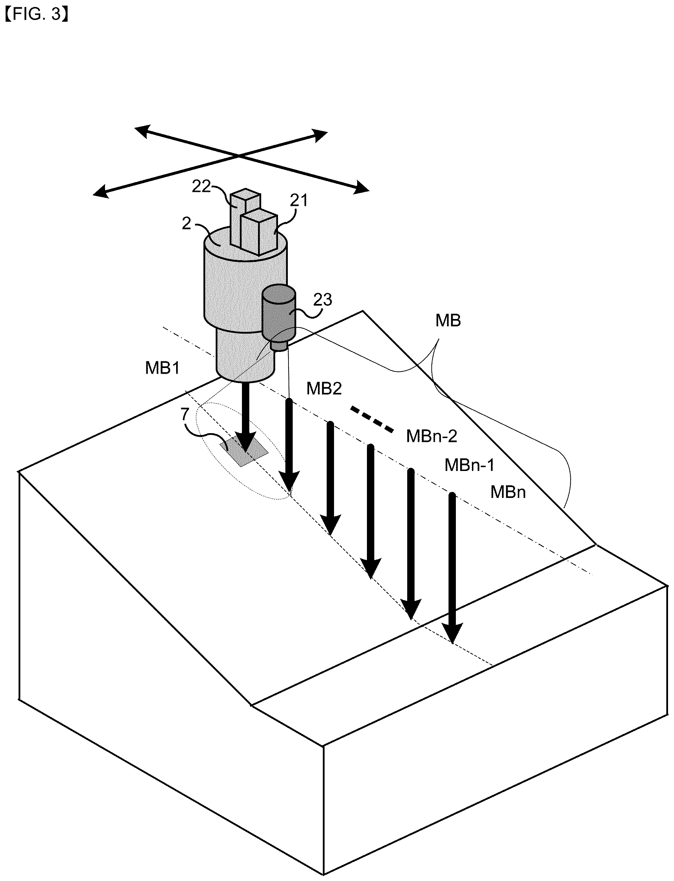

The guide light source unit 21 is configured to output a guide light. FIG. 2 shows an example of a spot shape SP of the guide light. The guide light source unit 21 is configured to continuously irradiate the guide light having such a shape to a measurement surface 7 of a plurality of measurement reference points MB (MB1, MB MB2, ..., MBn-2, MBn-1, MBn). FIG. 3 shows the measurement reference point MB and the measurement surface 7 of an object to be measured. The measurement reference point MB is one end of a distance between two points to the measurement surface 7. The measurement reference point MB is a reference point for measuring the object to be measured in three dimensions. Therefore, the measurement reference point MB is a coordinate point in an absolute coordinate system. The guide light source unit 21 irradiates the guide light to the measurement surface 7 of the object to be measured that is perpendicular to each measurement reference point MB. The coordinate points in a height direction of the measurement reference points MB are identical and are set at positions that do not interfere with the object to be measured. Arrangement of the measurement reference point MB may be in a straight line or in a grid of points. The guide light is visible light and is irradiated to the measurement surface 7 in a predetermined spot shape. The spot shape may be circular or rectangular.

The guide light can be visible light, infrared light, or ultraviolet light. It is sufficient as long as the imaging unit 23, which will be described later, can detect a guide light. For example, wavelength of the guide light can be from 600 nm to 1200 nm. Specifically, the wavelength of the guide light may be, for instance, 600, 620, 640, 660, 680, 700, 720, 740, 760, 780, 800, 820, 840, 860, 880, 900, 920, 940, 960, 980, 1000, 1020, 1040, 1060, 1080, 1100, 1120, 1140, 1160, 1180, 1200 nm, or may be in a range between any two of the numerical value illustrated above.

(Measurement light source unit 22)

The measurement light source unit 22 is configured to output a measurement light and irradiate the measurement light to the measurement surface 7 of a plurality of measurement reference points MB. The measurement light may be visible light, infrared light, or ultraviolet light. Here, the measurement light is, for instance, a laser light, and more preferably, the measurement light source unit 22 is an optical comb light source.

(imaging unit 23)

The imaging unit 23 is configured to image a spot of the guide light at the measurement surface of a first measurement reference point MB1. That is, the imaging unit 23 detects a reflected component of the guide light reflected at the measurement surface 7 and images the spot. For this purpose, the imaging unit 23 is, for instance, an optical imaging element, and may be a CCD (Charge Coupled Device) image sensor or a CMOS (Completely Metal Oxide Semiconductor) image sensor. The imaging unit 23 having a sensor corresponding to the wavelength of the guide light is selected.

(Light detection unit 24)

The light detection unit 24 comprises a reference light detection unit 241 and a measurement light detection unit 242. The reference light detection unit 241 detects part of a measurement light reflected by the beam splitter 25 (described later) to extract reference data. The measurement light detection unit 242 is configured to detect a scattered light reflection component of the measurement light at the measurement surface 7. The light detection unit 24 is a measurement device that detects electromagnetic energy such as light and converts it into electricity. Here, the light detection unit 24 is configured to be convertible into electrical data.

(Beam splitter 25)

The beam splitter 25 is arranged in the measurement unit 2. The beam splitter 25 allows part of the measurement light irradiated from the measurement light source unit 22 to reflect toward the reference light detection unit 241. The beam splitter 25 allows remaining light to transmit as measurement light and allows the measurement light entering from a reflection path to reflect toward the measurement light detection unit 242.

1.3 Measurement surface 7

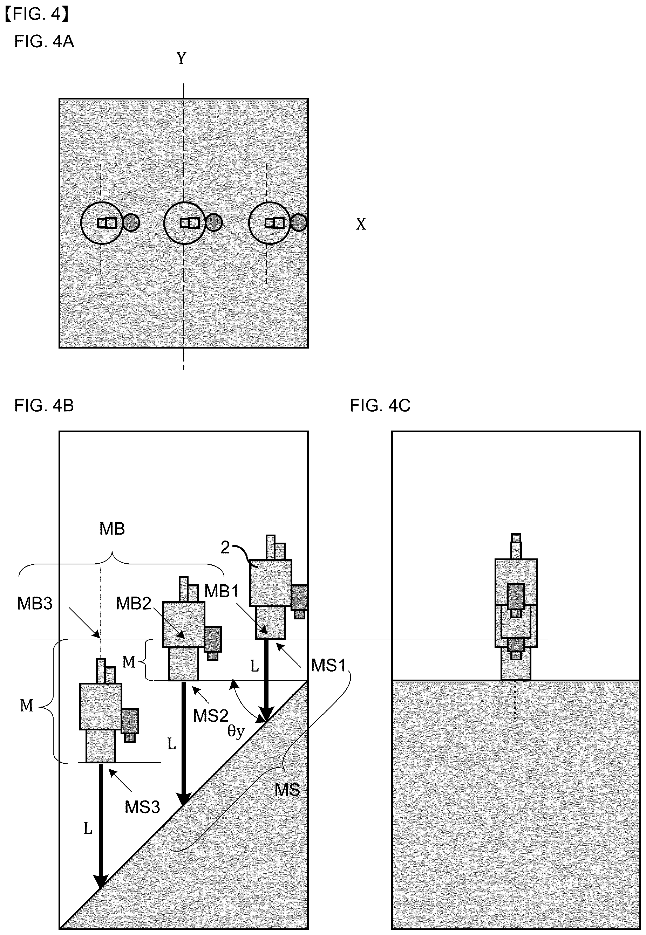

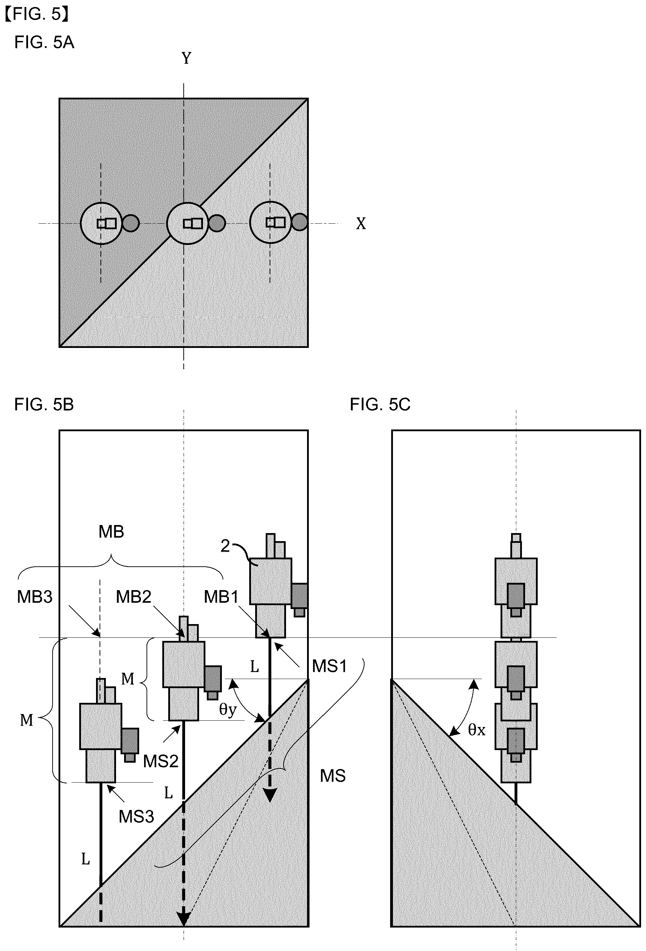

The measurement surface 7 is a surface of an object to be measured that is irradiated by measurement light and guide light. The measurement apparatus 1 measures a distance from the measurement reference point MB to the measurement surface 7 in three dimensions. FIG. 4 shows an aspect of an object to be measured having an inclination θy around Y-axis, and FIG. 4A to FIG. 4C are a plan view, a front view, and a side view, respectively. FIG. 5 shows an aspect of an object to be measured having an inclination θx around X-axis and an inclination θy around Y-axis, and FIG. 5A to FIG. 5C are a plan view, a front view, and a side view, respectively. Both figures show a state in which the measurement apparatus 1 is measuring a first distance L from a measurement start point MS to the measurement surface 7. The measurement apparatus 1 calculates an inclination of the measurement surface 7 based on a method described later. The inclination is not limited to X-axis or Y-axis but may be inclined in both axes simultaneously. The calculation of the inclination of the measurement surface 7 enables three-dimensional measurement of distance with high accuracy.

1.4 information processing apparatus 3

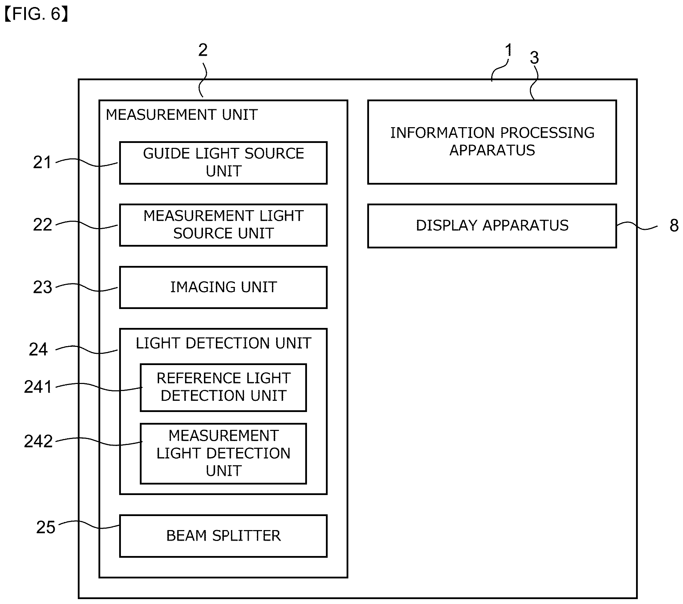

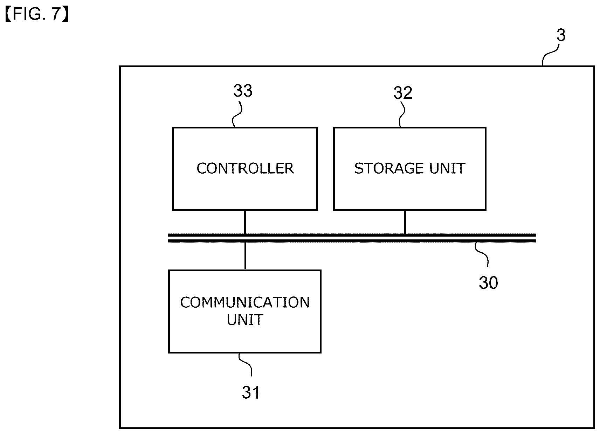

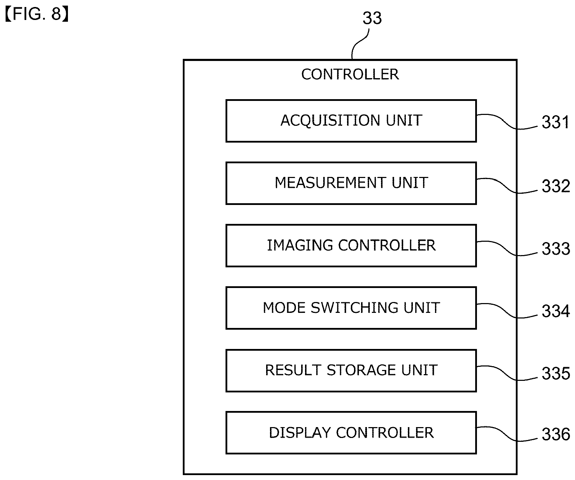

FIG. 6 is a block diagram showing a hardware configuration of the measurement apparatus 1. The information processing apparatus 3 is a component of the measurement apparatus 1. FIG. 7 is a block diagram showing a hardware configuration of the information processing apparatus 3. FIG. 8 is a functional block diagram showing a function performed by a controller 33 in the information processing apparatus 3. The information processing apparatus 3 comprises a communication unit 31, a storage unit 32, a controller 33 (acquisition unit 331, measurement unit 332, imaging controller 333, mode switching unit 334, result storage unit 335, display controller 336), and these components are electrically connected via a communication bus 30 inside the information processing apparatus 3. Hereinafter, each component will be further described.

(Communication unit 31)

The communication unit 31 preferably uses wired communication means such as USB, IEEE 1394, Thunderbolt, and wired LAN network communication, etc., but wireless LAN network communication, mobile communication such as LTE/3G, and Bluetooth (registered trademark) communication, etc. may also be included as necessary. In other words, it is more preferable to implement as a set of these communication means. In particular, the guide light source unit 21, the measurement light source unit 22, the imaging unit 23, and the light detection unit 24 are preferably configured to be able to communicate in a predetermined communication standard.

The communication unit 31 is configured to receive data detected by the light detection unit 24. Further, the communication unit 31 is configured to transmit data for the guide light source unit 21 and the measurement light source unit 22 to output light. Such a configuration enables the measurement apparatus 1 to control three-dimensional measurement of a distance from the measurement reference point MB to the measurement surface 7.

(Storage unit 32)

The storage unit 32 stores various information defined by the above description. This can be implemented as, for example, a storage device such as a solid state drive (SSD), or as a memory such as a random access memory (RAM) that stores temporarily necessary information (argument, array, etc.) for program operation. Moreover, a combination thereof may also be applied. In particular, the storage unit 32 stores data detected by the imaging unit 23 and the light detection unit 24. Furthermore, the storage unit 32 stores an acquisition program, a measurement program, a result storage program, and a display control program. In addition, the storage unit 32 also stores various programs or the like relating to the information processing apparatus 3 that are executed by the controller 33.

(Controller 33)

The controller 33 performs process and control of overall operation related to the information processing apparatus 3. The controller 33 is, for example, an unshown central processing unit (CPU). The controller 33 reads out a predetermined program stored in the storage unit 32 to realize various functions related to the information processing apparatus 3. Specifically, an acquisition function, a measurement function, a result storage function, and a display control function fall under this. That is, information processing by software (stored in storage unit 32) is specifically realized by hardware (controller 33) to realize as the acquisition unit 331, the measurement unit 332, the imaging controller 333, the mode switching unit 334, the result storage unit 335, and the display controller 336. Note that although FIG. 6 shows a single controller 33, the present invention is not limited to this, and a plurality of controllers 33 may be provided for each function. Moreover, a combination thereof may also be used. Hereinafter, the acquisition unit 331, the measurement unit 332, the imaging controller 333, the mode switching unit 334, the result storage unit 335, and the display controller 336 will be described in further detail.

(Acquisition unit 331)

The acquisition unit 331 is a unit in which information processing by software (stored in the storage unit 32) is specifically realized by hardware (controller 33). The acquisition unit 331 is configured to acquire electrical data detected by the imaging unit 23 and the light detection unit 24 via the communication unit 31.

(Measurement unit 332)

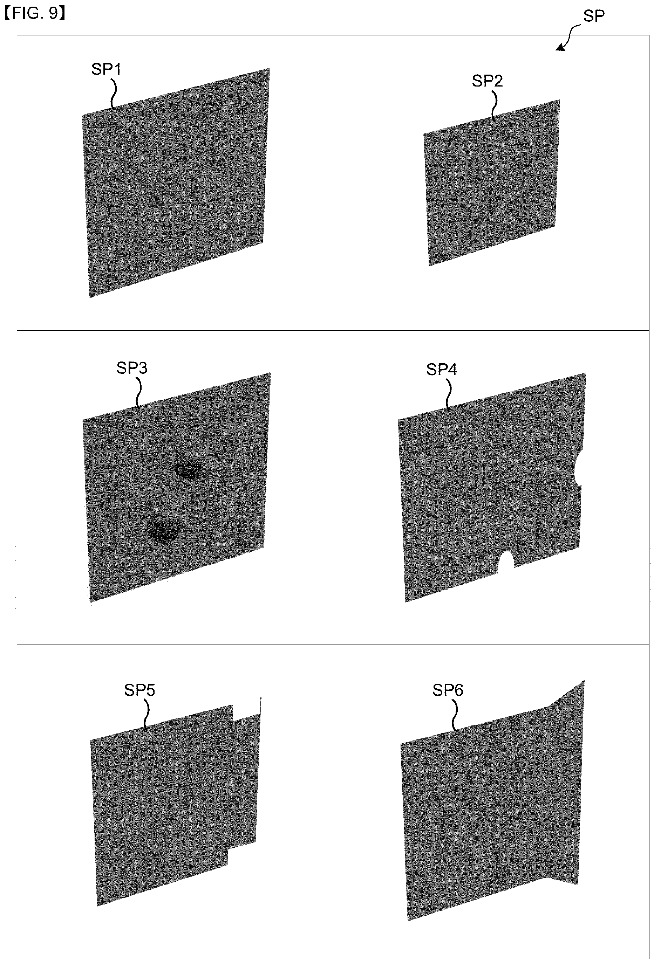

The measurement unit 332 is configured to calculate an inclination of the measurement surface 7 based on the spot shape SP of the guide light imaged by the imaging unit 23. Although the spot shape SP is square in FIG. 2, it may be circular or rectangular, and is not limited as long as it has a certain area. FIG. 9 shows an example of the spot shape SP of an imaged guide light. Since shape of the object to be measured is complex and has irregularities and steps, the spot shape SP of the guide light varies as shown in FIG. 9. The spot shape SP shown in FIG. 9 is a shape imaged at the measurement surface 7 inclined by 30° around the X-axis and 30° around the Y-axis. A spot shape SP1 is a shape imaged at a smooth measurement surface 7. A spot shape SP2 is a shape when a distance from the imaging unit 23 to the measurement surface 7 is far away. A spot shape SP3 is a shape when the measurement surface 7 has a convex portion. A spot shape SP4 is a shape when the measurement surface 7 has a concave portion. A spot shape SP5 and a spot shape SP6 are shapes when the measurement surface 7 has discontinuous surface. Based on such a complex spot shape SP, the measurement unit 332 can calculate inclination of the measurement surface 7 in a three-dimensional space in X-direction and Y-direction.

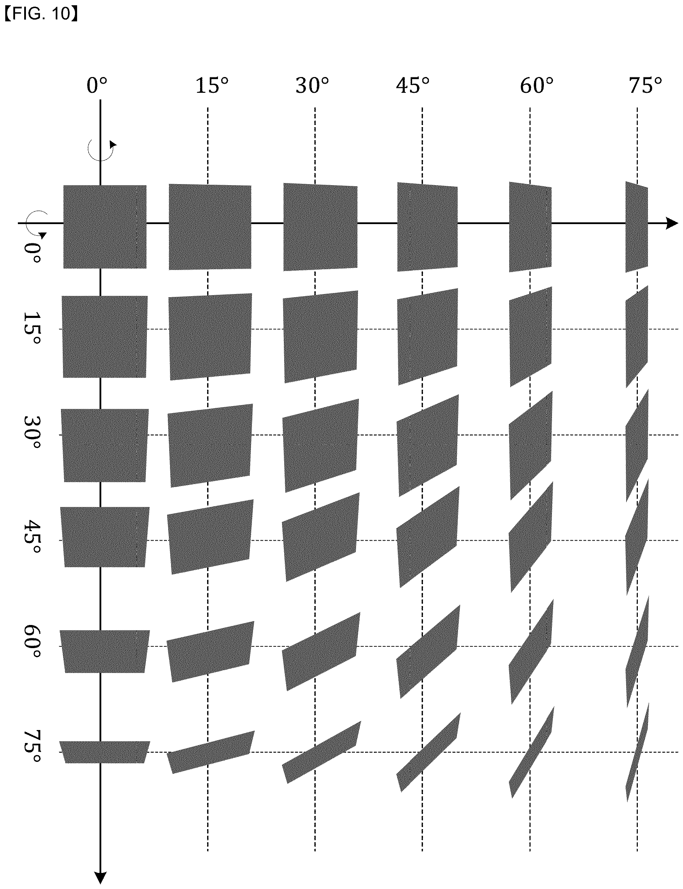

The storage unit 32 of the measurement apparatus 1 is configured to store reference data relating to the spot shape SP of the guide light. Here, the reference data is data in which a gradient with respect to a surface perpendicular to an irradiation direction of the guide light and the spot shape SP at each gradient are linked. FIG. 10 shows an example of reference data relating to the spot shape SP. The reference data is a black-and-white image obtained by allowing the spot shape SP to rotate around the X-axis and Y-axis in advance. The measurement unit 332 pre-processes the imaged spot shape SP, binarizes it with a predetermined threshold value, converts it into a black-and-white image, performs pattern matching with each image of the reference data, and calculates an inclination of the measurement surface 7 based on the reference data with the highest matching. Although FIG. 10 shows reference data only for a fourth quadrant of plane coordinates, reference data for a first quadrant, a second quadrant, and a third quadrant may be prepared. Further, reference data may also be prepared by chopping rotation angles around X-axis and Y-axis in detail. In performing this process, even more accurate result can be obtained if pattern matching is performed by appropriately changing size of the imaged spot shape SP.

The reference data relating to the spot shape SP of the guide light may be a learned model that is allowed to learn a correlation between the gradient and the spot shape SP at each gradient. The learned model is created by linking each gradient created by rotating the spot shape SP around the X-axis and Y-axis with the reference data relating to the spot shape SP. The learned model is stored in the storage unit 32 in advance. As shown in FIG. 10, the learned model can be created by allowing the spot shape SP of many guide lights to variously rotate around X-axis and Y-axis.

The measurement unit 332 is configured to calculate an inclination of the measurement surface 7 based on the learned model. Therefore, when the spot shape SP of the guide light imaged by the imaging unit 23 is input to the learned model, the measurement unit 332 specifies the reference data with the strongest correlation and calculates the inclination of the measurement surface 7. By creating a learned model using many reference data, the measurement unit 332 can accurately calculate the inclination of the measurement surface 7.

The measurement unit 332 may also use geometric transformation to calculate an inclination of the measurement surface 7. For instance, projective transformation, which is one of geometric transformations, may be used. Arbitrary coordinate (x, y) moves to (x', y') by projective transformation of Equation (1). Here, a, b, c, d, e, f, g, and h are parameters.

[Equation 1]

Eqn. 1

$$x' = \frac{ax + by + c}{gx + hy + 1}$$

$$y' = \frac{dx + ey + f}{gx + hy + 1}$$

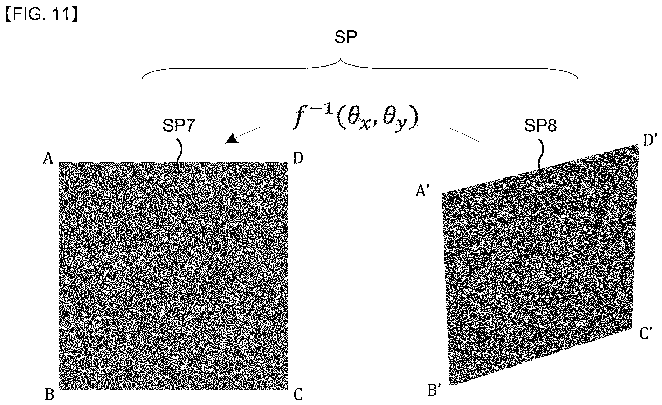

Using an inverse transformation formula of Equation 1, the coordinate (x', y') is allowed to rotate around X-axis and Y-axis by a predetermined angle, and the coordinate (x, y) may be obtained. This is repeated until the imaged spot shape SP becomes a square spot shape SP. FIG. 11 shows a method for calculating an inclination of the measurement surface 7 based on an inverse transformation formula of projective transformation. As shown in FIG. 11, each vertex A', B', C', D' of a imaged spot shape SP8 is inversely transformed with inclinations θx and θy. In other words, this inverse transformation is repeated while changing the inclinations θx and θy until lengths of each side AB, BC, CD, and DA obtained from each vertex A, B, C, and D of an inversely transformed spot shape SP7 become equal. When length of each side becomes substantially the same, the inverse transformation is stopped, and inclination of the measurement surface 7 is set to θx, θy.

The measurement unit 332 is configured to calculate a depth of a second measurement reference point MB2 corresponding to a next order of the first measurement reference point MB1 based on the calculated inclination of the measurement surface 7. Based on the depth, the measurement unit 332 determines whether the measurement light source unit 22 is within a working distance at next measurement reference point MB. When within the working distance, the measurement light source unit 22 does not move to a height direction. When outside the working distance, the measurement light source unit 22 moves to the measurement start point MS so as to be within the working distance. If shape of the object to be measured is complex and a distance from the measurement reference point MB to the measurement surface 7 is outside a focal distance, highly accurate measurement cannot be performed. Therefore, by calculating the depth of the measurement surface 7 based on the inclination of the measurement surface 7 and moving the measurement light source unit 22 to the measurement start point MS so as to be within the working distance, highly accurate measurement can be performed. Since the measurement start point MS is within the working distance, it is located both above and below in relation to the measurement reference point MB. In FIGS. 3 to 5, ends of the measurement unit 2 are set to be the measurement reference point MB and the measurement start point MS. There is no problem as long as the measurement light source unit 22 is within the working distance.

The measurement unit 332 is configured to continuously measure the first distance L, which is a distance from the measurement start point MS to a reflection point of the measurement light at the measurement surface 7, based on the scattered light reflection component of the measurement light reflected by the measurement surface 7. The measurement start point MS is located within the working distance. The first distance L is a distance physically measured by the measurement apparatus 1. The measurement unit 332 is configured to calculate a measurement distance by adding the first distance L and a second distance M, which is a distance from the measurement reference point MB to the measurement start point MS. The second distance M is a distance at which the measurement light source unit 22 was allowed to move in advance so as to be within the working distance, a distance from the measurement reference point MB to the measurement start point MS, and a value calculated by the measurement unit 332. The second distance M varies depending on the depth of the measurement surface 7. The measurement apparatus 1 is configured to measure shape of the measurement surface 7 in this manner. Although the distance physically measured by the measurement apparatus 1 is a distance from the measurement light source unit 22 to the measurement surface 7, it can also be a distance from the end of the measurement unit 2. The measured distance can be converted based on design data of the measurement apparatus 1, and the reference position of measurement is not specified.

There are many methods for non-contact distance measurement. Here, a principle of an optical pulse method is used to explain the measurement method. The measurement unit 332 allows the measurement light source unit 22 to output light, and measures a round trip time τ of light from reference signal data detected by the reference light detection unit 241 and measurement signal data detected by the measurement light detection unit 242. The first distance L to the measurement surface 7 of the object to be measured is obtained as in Equation 2.

[Equation 2]

## Eqn. 2

$$L = \frac{c}{2n}\tau$$

However, n is an average refractive index of an optical path, and c is a velocity of light in vacuum.

When the measurement light source unit 22 is an optical comb light source, a distance can be measured by interferometric measurement using an optical comb. The distance is measured by providing a bandpass filter (not shown) in the measurement unit 2, extracting a high-frequency component, and obtaining an electrical phase difference in mode interval frequency.

(imaging controller 333)

The imaging controller 333 is configured to adjust a position of the imaging unit 23 or its focal point position in such a manner that the depth from the measurement reference point MB to the measurement surface 7 calculated in the previous measurement is within a depth of field of the imaging unit 23. The imaging controller 333 adjusts a position of the imaging unit 23 in such a manner that the spot shape SP of the guide light is always in focus at the measurement reference point MB. When adjusting, the position of the imaging unit 23 or its focal position may be adjusted directly, or a position of the measurement unit 2 having the imaging unit 23 may be adjusted. The adjustment method is not limited.

The imaging controller 333 is configured to allow the measurement light source unit 22 to move from the measurement reference point MB to the measurement start point MS based on the adjusted position of the imaging unit 23 or its focal point position. That is, when the measurement light source unit 22 is out of working distance, the imaging controller 333 allows the measurement light source unit 22 to move in the height direction to the measurement start point MS in such a manner that the measurement surface 7 is in focus. If it is already within the working distance, the measurement light source unit 22 does not move. In this manner, stable measurement becomes possible by allowing the measurement light source unit 22 to move so as to be within the working distance at the measurement reference point MB. Since the inclination of the measurement surface 7 is calculated for each measurement, the depth from the next measurement reference point MB to the measurement surface 7 can be calculated. Based on the depth, the imaging controller 333 adjusts position of the imaging unit 23 in such a manner that the spot shape SP of the guide light is in focus, and further allows the measurement light source unit 22 to move in such a manner that the measurement light source unit 22 is within the working distance. When moving, only the measurement light source unit 22 may be allowed to directly move, or the measurement unit 2 having the measurement light source unit 22 may be allowed to move. The movement method is not limited.

(Mode switching unit 334)

The mode switching unit 334 is configured to switch between a guide light mode and a measurement light mode. Here, the guide light mode is a mode in which the guide light source unit 21 outputs the guide light, and the measurement light mode is a mode in which the measurement light source unit 22 outputs the measurement light. As an example of a method for the measurement apparatus 1 to measure the measurement surface 7 of the object to be measured in three dimensions, there is a method of first measuring an inclination of the measurement surface 7 at each measurement reference point MB and a depth from each measurement reference point MB to the measurement surface 7 in the guide light mode, then switching to the guiding light mode to calculate the measuring distance from each measurement reference point MB to the measurement surface 7. In this method, the inclination of each measurement reference point MB and the depth from each measurement reference point MB to the measurement surface 7 are stored in the storage unit 32 in advance in the guided light mode. Next, in the guided light mode, the imaging controller 333 reads these data from the storage unit 32, and based on these data, allows the measurement light source unit 22 to move in such a manner that the measurement light source unit 22 is within the working distance, then measures a precise distance from the measurement start point MS.

(Result storage unit 335)

The result storage unit 335 is a unit in which information processing by software (stored in the storage unit 32) is specifically realized by hardware (controller 33). The result storage unit 335 stores data relating to measurement in the storage unit 32, such as coordinate point of each measurement reference point MB, the inclination of the measurement surface 7 at each measurement reference point MB calculated in guide light mode, or the depth from each measurement reference point MB to the measurement surface 7.

(Display controller 336)

The display controller 336 is a unit in which information processing by software (stored in the storage unit 32) is specifically realized by hardware (controller 33). During or after measurement, the display controller 336 allows data relating to measurement to be displayed on the display apparatus 8, such as the coordinate point of each measurement reference point MB, the inclination of the measurement surface 7 at each measurement reference point MB, or the depth from each measurement reference point MB to the measurement surface 7. Since these data display measurement status at a production site in real time, it is possible to quickly grasp and specify problem with the measurement surface 7 of the object to be measured. As a result, it is useful for quick countermeasures or the like.

2. Measurement method

In section 2, a measurement method using the measurement apparatus 1 described in section 1 will be described. The measurement method comprises a guide light output step of outputting a guide light and continuously irradiate the guide light to a measurement surface 7 of a plurality of measurement reference points MB, wherein the measurement reference point MB is one end of a distance between two points to the measurement surface 7; an imaging step of imaging a spot of the guide light at the measurement surface 7 of a first measurement reference point MB1; an inclination measurement step of calculating an inclination of the measurement surface 7 based on a imaged spot shape SP, and based on the inclination, calculating a depth of a second measurement reference point MB2 corresponding to a next order of the first measurement reference point MB1; an imaging control step of adjusting a position of the imaging unit 23 or its focal point position in such a manner that the depth is within a depth of field of the imaging unit 23; a measurement light control step of allowing the measurement light source unit 22 to move from the measurement reference point MB to the measurement start point MS based on the position of the imaging unit 23 or its focal point position; a measurement light output step of outputting a measurement light and irradiate the measurement light to the measurement surface 7; a measurement light detection step of detecting a scattered light reflection component of the measurement light at the measurement surface 7; and a distance measurement step of continuously measuring a first distance L, which is a distance from a measurement start point MS to a reflection point of the measurement light at the measurement surface 7, based on the scattered light reflection component, and calculating a measurement distance by adding the first distance L and a second distance M, which is a distance from the measurement reference point MB to the measurement start point MS, and thereby measure a shape of the measurement surface 7. Specifically, the measurement method is divided into two parts.

2.1 Method for calculating inclination of measurement surface 7 at measurement reference point MB

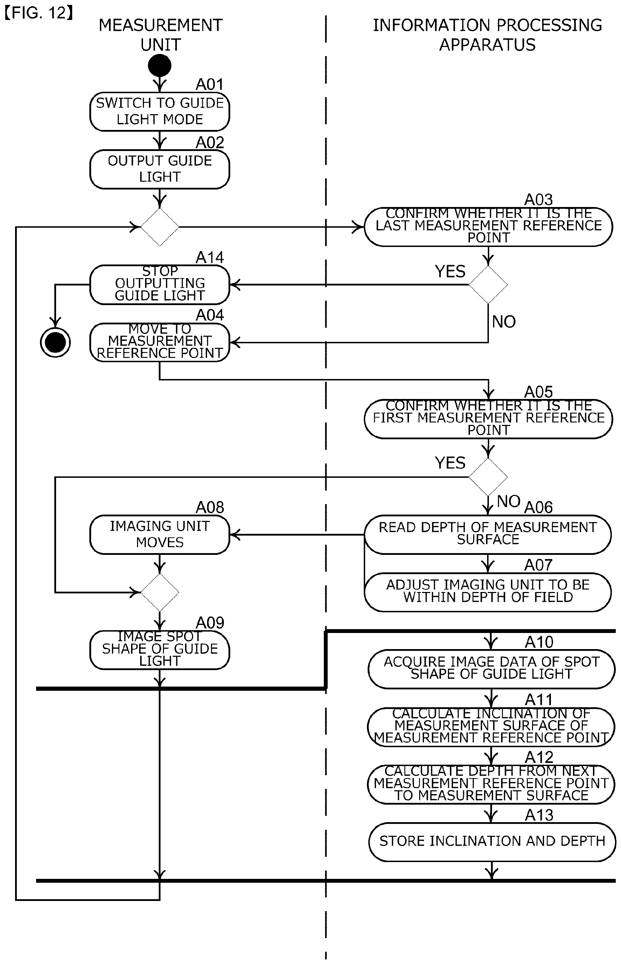

In this section, an example of a method for calculating an inclination of the measurement surface 7 will be described. FIG. 12 is an activity diagram of a method for calculating an inclination of the measurement surface 7 in an embodiment. Hereinafter, description will be made along with this figure.

(Activity A01)

A user switches to the guide light mode with the mode switching unit 334.

(Activity A02)

The guide light source unit 21 outputs guide light.

(Activity A03)

The measurement unit 332 confirms whether it is the last measurement reference point MB.

(Activity A04)

If it is not the last measurement reference point MB, the guide light source unit 21 irradiates the guide light to the measurement surface 7. If it is the last measurement reference point MB, Activity A14 is executed.

(Activity A05)

The measurement unit 332 confirms whether it is the first measurement reference point MB.

(Activity A06)

If it is not the first measurement reference point MB, the imaging controller 333 reads the depth from the measurement reference point MB to the measurement surface 7 from the storage unit 32.

(Activity A07)

The imaging controller 333 adjusts the imaging unit 23 to be within the depth of field based on the depth read from the storage unit 32.

(Activity A08)

imaging unit 23 moves within the depth of field.

(Activity A09)

The imaging unit 23 images the spot shape SP of the guide light.

(Activity A10)

The acquisition unit 331 acquires image data of the spot shape SP of the guide light.

(Activity A11)

The measurement unit 332 calculates the inclination of the measurement surface 7 based on the image data of the spot shape SP of the guide light.

(Activity A12)

The measurement unit 332 calculates the depth to the measurement surface 7 at next measurement reference point MB based on the inclination of the measurement surface 7.

(Activity A13)

The result storage unit 335 allows the inclination of the measurement surface 7 and the depth to the measurement surface 7 at the next measurement reference point MB to be stored in the storage unit 32.

(Activity A14)

The guide light source unit 21 stops outputting the guide light and terminates the process.

2.2 Method for measuring distance to measurement surface 7 at measurement reference point MB

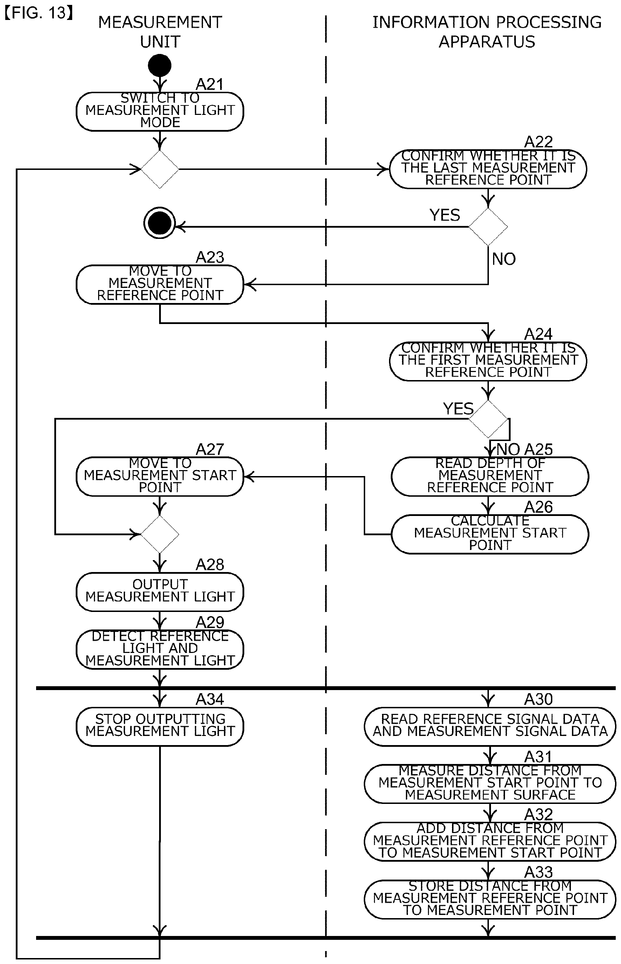

In this section, an example of a method for three-dimensional measuring the distance to the measurement surface 7 of an object to be measured will be described. FIG. 13 is an activity diagram of a method for calculating an inclination of the measurement surface 7 in an embodiment.

(Activity A21)

A user switches to the measurement light mode with the mode switching unit 334.

(Activity A22)

The measurement unit 332 confirms whether it is the last measurement reference point MB.

(Activity A23)

If it is not the last measurement reference point MB, the measurement light source unit 22 moves to the next measurement reference point MB. If it is the last measurement reference point MB, the process terminates.

(Activity A24)

The imaging controller 333 confirms whether it is the first measurement reference point MB.

(Activity A25)

If it is not the first measurement reference point MB, the imaging controller 333 reads the depth of the measurement reference point MB from the storage unit 32.

(Activity A26)

The imaging controller 333 calculates the measurement start point MS based on the depth of the measurement reference point MB in such a manner that the measurement light source unit 22 is within the working distance.

(Activity A27)

The measurement light source unit 22 moves to the measurement start point MS.

(Activity A28)

The measurement light source unit 22 outputs the measurement light.

(Activity A29)

The reference light detection unit 241 detects reference light. The measurement light detection unit 242 detects measurement light.

(Activity A30)

The acquisition unit 331 acquires reference signal data and measurement signal data.

(Activity A31)

The measurement unit 332 measures the first distance L from the measurement start point MS to the measurement surface 7 based on the reference signal data and the measurement signal data.

(Activity A32)

The measurement unit 332 adds the first distance L and the second distance M from the measurement reference point MB to the measurement start point MS to measure a distance from the measurement reference point MB to the measurement surface 7.

(Activity A33)

The result storage unit 335 allows the distance from the measurement reference point MB to the measurement surface 7 to be stored in the storage unit 32.

(Activity A34)

The measurement light source unit 22 stops outputting the measurement light.

## 3. Overall configuration of second embodiment

In section 3, overall configuration of a second embodiment will be described in order. Descriptions of parts that overlap with the first embodiment will be omitted as appropriate.

### 3.1 Measurement apparatus 1

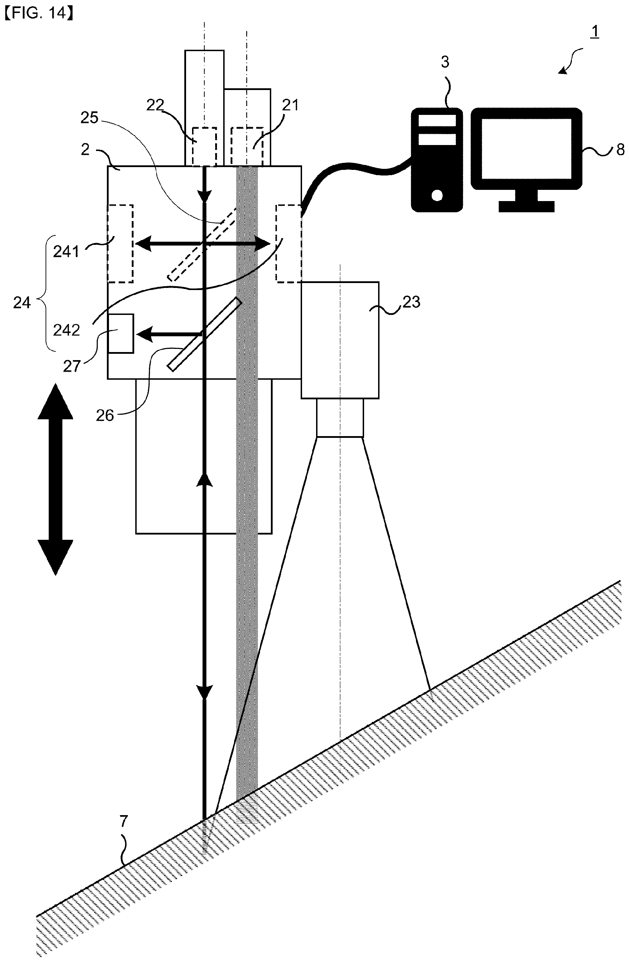

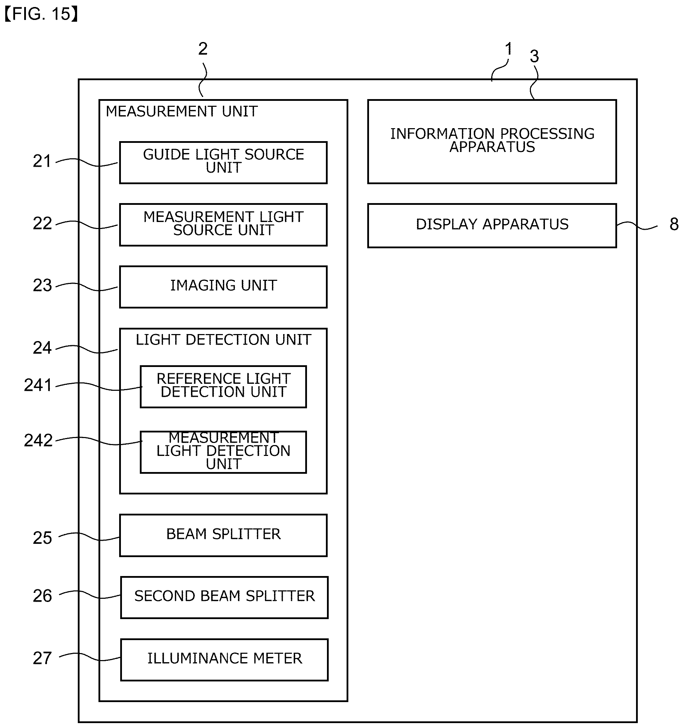

In this section, a measurement apparatus according to the second embodiment will be described. FIG. 14 is an overall configuration diagram of a measurement apparatus 1 according to the second embodiment. FIG. 15 is a block diagram showing a hardware configuration of the measurement apparatus 1 according to the second embodiment. As shown in FIG. 14, the measurement apparatus 1 comprises a measurement unit 2, an information processing apparatus 3, and a display apparatus 8, as in the first embodiment. The measurement apparatus 1 measures a measurement surface 7 of an object to be measured in a non-contact three-dimensional manner. The information processing apparatus 3 is electrically connected to a measurement unit 2 in such a manner that detection signal from a light detection unit 24 and an illuminance meter 27 can be input. The components added to the measurement unit 2 and the information processing apparatus described in the first embodiment will be described in further detail hereinafter.

### 3.2 Measurement unit 2

In the second embodiment, the measurement unit 2 comprises a guide light source unit 21, a measurement light source unit 22, an imaging unit 23, a light detection unit 24, a beam splitter 25, a second beam splitter 26, and an illuminance meter 27. The measurement unit 2 is provided on an XY stage (not shown), a hand of a Cartesian coordinate-type robot (not shown), or the like, and measures the object to be measured in a non-contact three-dimensional manner. Among these components, the second beam splitter 26 and the illuminance meter 27, which are added to the second embodiment, will be described hereinafter.

### (Second beam splitter 26)

The second beam splitter 26 is arranged in the measurement unit 2. The second beam splitter 26 allows a measurement light irradiated from the measurement light source unit 22 to transmit toward the measurement surface 7, and allows part of scattered light reflected at the measurement surface 7 entering from a reflection path to reflect toward the illuminance meter 27, which will be described later, at a predetermined split ratio, and allows remaining scattered light to transmit toward the beam splitter 25.

### (Illuminance meter 27)

The illuminance meter 27, also called a photometer, is a photometric instrument that measures illuminance or irradiance, and measures intensity of light such as scattered light, absorption, and fluorescence. Here, the illuminance meter 27 is attached to the measurement unit 2 and measures intensity of part of the scattered light reflected at the measurement surface 7.

### 3.3 information processing apparatus 3

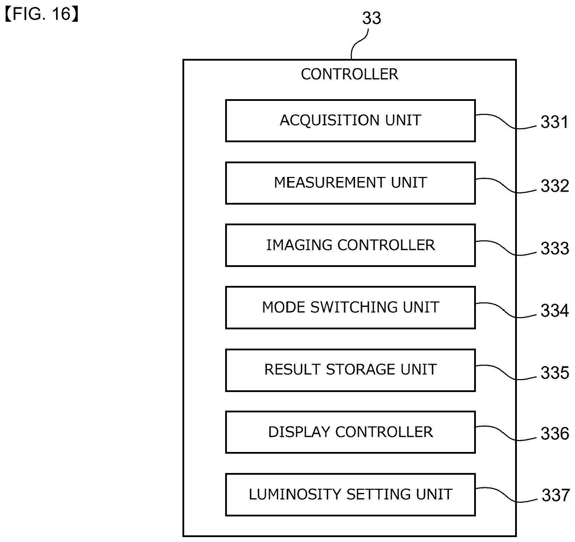

The information processing apparatus 3 is a component of the measurement apparatus 1. FIG. 16 is a functional block diagram showing a function performed by a controller 33 in the information processing apparatus 3 according to the second embodiment. The information processing apparatus 3 comprises a communication unit 31, a storage unit 32, a controller 33 (an acquisition unit 331, a measurement unit 332, an imaging controller 333, a mode switching unit 334, a result storage unit 335, a display controller 336, and a luminosity setting unit 337), and these components are electrically connected via a communication bus 30 inside the information processing apparatus 3. Hereinafter, the luminosity setting unit 337, which is added to the components of the first embodiment, will be further described.

### (Luminosity setting unit 337)

The luminosity setting unit 337 may set a luminosity of a measurement light output from the measurement light source unit 22 based on an inclination of the measurement surface 7. The inclination of the measurement surface 7 is an inclination of an inclination $\theta x$ around X-axis and an inclination $\theta y$ around Y-axis of the measurement surface 7 measured by the measurement unit 332 as described above. Specifically, based on calculation results of both inclinations, such as an average value of the inclinations $\theta x$ and $\theta y$, which are the inclinations of each axis, a minimum value among two angles, and a maximum value among two angles, the luminosity setting unit 337 sets luminosity of the measurement light. When calculated values of these two inclinations are small, luminance of the scattered light reflected at the measurement surface 7 is large, thus the luminosity setting unit 337 sets the luminosity of the measurement light to be small. Conversely, when calculated values of both inclinations are large, the luminance of the scattered light reflected at the measurement surface 7 is small, thus the luminosity setting unit 337 sets the luminosity of the measurement light to be large.

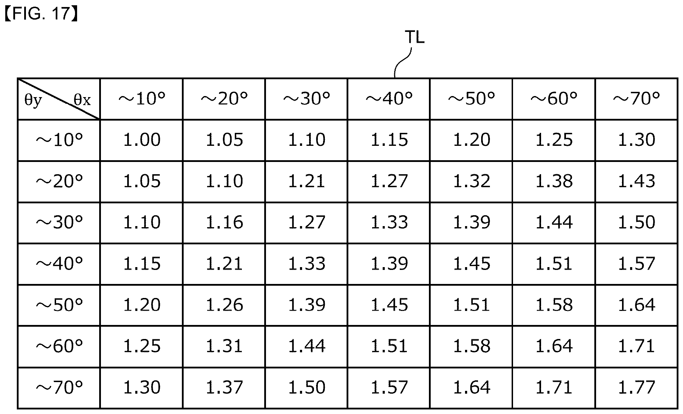

FIG. 17 is a schematic diagram showing an example of a two-dimensional lookup table TL used for luminosity setting of a measurement light in the second embodiment. As shown in FIG. 17, the luminosity setting unit 337 may use the two-dimensional lookup table TL to set luminosity of the measurement light. That is, a horizontal axis of the two-dimensional lookup table TL is an inclination $\theta x$ around X-axis and a vertical axis is an inclination $\theta y$ around Y-axis, and a luminosity value of the measurement light is set in each array. The value here is a ratio of the inclination $\theta x$ around X-axis and the inclination $\theta y$ around Y-axis of the measurement surface 7 to the luminosity of the measurement light at 10° or less. By storing such a two-dimensional lookup table TL in the storage unit 32, the luminosity setting unit 337 specifies the array of the two-dimensional lookup table TL from the inclination $\theta x$ around the X-axis and the inclination $\theta y$ around the Y-axis for a horizontal axis, and uses value read from the storage unit 32 to set the luminosity of the measurement light. Set value of each inclination of the vertical and horizontal axes of the lookup table TL and value of each array are determined by measurement condition such as wavelength of the measurement light, material of the measurement surface 7, and state of surface treatment.

The luminosity setting unit 337 may set the luminosity of the measurement light output from the measurement light source unit 22 based on a scattered light reflected at the measurement surface 7. Here, an example will be described in which the luminosity setting unit 337 sets luminosity of the measurement light output from the measurement light source unit 22 based on intensity of the scattered light. As shown in FIG. 15, the illuminance meter 27 measuring the intensity of the scattered light is attached to the measurement unit 2. The second beam splitter 26 arranged in the measurement unit 2 allows part of the scattered light reflected at the measurement surface 7 to reflect toward the illuminance meter 27. With such a configuration, the illuminance meter 27 measures the intensity of scattered light reflected by the measurement surface 7. Specifically, when the intensity of the scattered light measured by the illuminance meter 27 is small, the luminosity setting unit 337 sets the luminosity of the measurement light output from the measurement light source unit 22 to be large. Conversely, when the intensity of the scattered light measured by the illuminance meter 27 is large, the luminosity setting unit 337 sets the luminosity of the measurement light output from the measurement light source unit 22 to be small.

Instead of the illuminance meter 27, based on electrical signal converted from the measurement light detection unit 242, the measurement apparatus 1 may measure intensity of the scattered light. Furthermore, the intensity of the scattered light may be measured based on a spot of the guide light at the measurement surface 7 imaged by the imaging unit 23. For instance, specifically, the intensity of the scattered light is measured by image processing intensity image of the imaged spot.

In this way, the luminosity setting unit 337 sets the luminosity of the measurement light output from the measurement light source unit 22 based on the intensity of the scattered light reflected at the measurement surface 7, in such a manner that stable measurement can always be performed and the measurement light can be output from the measurement light source unit 22 with an appropriate amount of light. A mechanism of setting the luminosity of the measurement light based on the intensity of the scattered light may realize stability and energy saving of three-dimensional measurement.

4. Others

The embodiments described above may be implemented according to the following manner.

(1) The imaging controller 333 may adjust the imaging unit 23 to enter a depth of field at next measurement reference point MB during measurement and allows the measurement light source unit 22 to move to the measurement start point to be within the working distance. After moving, the measurement unit 332 measures a distance to the measurement surface 7.
(2) The spot shape SP of the guide light is not limited to square in the embodiment. The spot shape SP can be circular or other rectangular.
(3) Distance measurement is not limited to the method described above, and optical modulation, matching, optical comb interferometry, or the like may be applied as appropriate.
(4) The measuring light may function as a guide light. That is, the measurement apparatus 1 may use light output from a single light source to calculate inclination and depth of the measurement surface 7 and may further measure a distance to the measurement surface 7.
(5) A program allowing a computer to perform the measurement method described above may be provided.

In addition, the present invention may be provided in each of the following aspects.

The measurement apparatus, further comprising: a measurement light source unit configured to output a measurement light and irradiate the measurement light to the measurement surface, and a measurement light detection unit configured to detect a scattered light reflection component of the measurement light at the measurement surface, wherein the measurement unit is configured to continuously measure a first distance, which is a distance from a measurement start point to a reflection point of the measurement light at the measurement surface, based on the scattered light reflection component, and calculate a measurement distance by adding the first distance and a second distance, which is a distance from the measurement reference point to the measurement start point, and thereby measure a shape of the measurement surface.

The measurement apparatus, further comprising: an imaging controller configured to adjust a position of the imaging unit or its focal point position in such a manner that the depth is within a depth of field of the imaging unit.

The measurement apparatus, wherein: the imaging controller is configured to allow the measurement light source unit to move from the measurement reference point to a measurement start point based on the position of the imaging unit or its focal point position.

The measurement apparatus, further comprising: a mode switching unit configured to switch between a guide light mode and a measurement light mode, wherein the guide light mode is a mode in which the guide light source unit outputs the guide light, and the measurement light mode is a mode in which the measurement light source unit outputs the measurement light.

The measurement apparatus, further comprising: a storage unit configured to store reference data, wherein the reference data is data in which a gradient with respect to a surface perpendicular to an irradiation direction of the guide light and a shape of the spot at each gradient are linked, wherein the measurement unit is configured to calculate an inclination of the measurement surface based on the reference data.

The measurement apparatus, wherein: the reference data is a learned model that is allowed to learn a correlation between the gradient and the shape of the spot at each gradient, and the measurement unit is configured to calculate an inclination of the measurement surface based on the learned model.

The measurement apparatus, wherein: the measurement light source unit is an optical comb light source.

The measurement apparatus, wherein: the shape of the spot is rectangular.

The measurement apparatus, further comprising: a luminosity setting unit configured to set a luminosity of the measurement light output from the measurement light source unit based on the inclination of the measurement surface or the scattered light reflected from the measurement surface.

A measurement method, comprising: a guide light output step of outputting a guide light and continuously irradiate the guide light to a measurement surface of a plurality of measurement reference points, wherein the measurement reference point is one end of a distance between two points to the measurement surface; an imaging step of imaging a spot of the guide light at the measurement surface of a first measurement reference point; an inclination measurement step of calculating an inclination of the measurement surface based on a shape of the imaged spot, and based on the inclination, calculating a depth of a second measurement reference point corresponding to a next order of the first measurement reference point; an imaging control step of adjusting a position of an imaging unit or its focal point position in such a manner that the depth is within a depth of field of the imaging unit; a measurement light control step of allowing a measurement light source unit to move from the measurement reference point to a measurement start point based on the position of the imaging unit or its focal point position; a measurement light output step of outputting a measurement light and irradiate the measurement light to the measurement surface; a measurement light detection step of detecting a scattered light reflection component of the measurement light at the measurement surface; and a distance measurement step of continuously measuring a first distance, which is a distance from the measurement start point to a reflection point of the measurement light at the measurement surface, based on the scattered light reflection component, and calculating a measurement distance by adding the first distance and a second distance, which is a distance from the measurement reference point to the measurement start point, and thereby measure a shape of the measurement surface.

A program, wherein: the program allows a computer to perform the measurement method.

Of course, the above aspects are not intended to limit the present invention.

Finally, various embodiments of the present invention have been described, but these are presented as examples and are not intended to limit the scope of the invention. The novel embodiment can be implemented in various other forms, and various omissions, replacements, and changes can be made without departing from the abstract of the invention. The embodiment and its modifications are included in the scope and abstract of the invention and are included in the scope of the invention described in the claims and the equivalent scope thereof.

REFERENCE SIGNS LIST

    1: Measurement apparatus
    2: Measurement unit
    21: Guide light source unit
    22: Measurement light source unit
    23: imaging unit
    24: Light detection unit
    241: Reference light detection unit
    242: Measurement light detection unit
    25: Beam splitter
    26: Second beam splitter
    27: Illuminance meter
    3: information processing apparatus
    30: Communication bus
    31: Communication unit
    32: Storage unit
    33: Controller
    331: Acquisition unit
    332: Measurement unit
    333: Imaging controller
    334: Mode switching unit
    335: Result storage unit
    336: Display controller
    337: Luminosity setting unit

7: Measurement surface

8: Display apparatus

L: First distance

M: Second distance

MB: Measurement reference point

MB1: First measurement reference point

MB2: Second measurement reference point

MB3: Third measurement reference point

MBn-2: n-2-th measurement reference point

MBn-1: n-1-th measurement reference point

MBn: n-th measurement reference point

MS: Measurement start point

SP: Spot shape

SP1: Spot shape

SP2: Spot shape

SP3: Spot shape

SP4: Spot shape

SPS: Spot shape

SP6: Spot shape

SP7: Spot shape

SP8: Spot shape

TL: Lookup table

$\theta x$: Inclination

$\theta y$: inclination

**Claims**

1. A measurement apparatus, comprising:

   a guide light source unit configured to output a guide light and continuously irradiate the guide light to a measurement surface of a plurality of measurement reference points, wherein the measurement reference point is one end of a distance between two points to the measurement surface;
   an imaging unit configured to image a spot of the guide light at the measurement surface of a first measurement reference point; and
   a measurement unit configured to calculate an inclination of the measurement surface based on a shape of the imaged spot, and based on the inclination, to calculate a depth of a second measurement reference point corresponding to a next order of the first measurement reference point.

2. The measurement apparatus according to claim 1, further comprising:

   a measurement light source unit configured to output a measurement light and irradiate the measurement light to the measurement surface, and
   a measurement light detection unit configured to detect a scattered light reflection component of the measurement light at the measurement surface, wherein
the measurement unit is configured to

   continuously measure a first distance, which is a distance from a measurement start point to a reflection point of the measurement light at the measurement surface, based on the scattered light reflection component, and
   calculate a measurement distance by adding the first distance and a second distance, which is a distance from the measurement reference point to the measurement start point, and thereby measure a shape of the measurement surface.

3. The measurement apparatus according to claim 2, further comprising:
   an imaging controller configured to adjust a position of the imaging unit or its focal point position in such a manner that the depth is within a depth of field of the imaging unit.

4. The measurement apparatus according to claim 3, wherein:
   the imaging controller is configured to allow the measurement light source unit to move from the measurement reference point to a measurement start point based on the position of the imaging unit or its focal point position.

5. The measurement apparatus according to any one of claims 2 to 4, further comprising:
   a mode switching unit configured to switch between a guide light mode and a measurement light mode, wherein the guide light mode is a mode in which the guide light source unit outputs the guide light, and the measurement light mode is a mode in which the measurement light source unit outputs the measurement light.

6. The measurement apparatus according to any one of claims 2 to 5, further comprising:

   a storage unit configured to store reference data, wherein the reference data is data in which a gradient with respect to a surface perpendicular to an irradiation direction of the guide light and a shape of the spot at each gradient are linked, wherein
   the measurement unit is configured to calculate an inclination of the measurement surface based on the reference data.

7. The measurement apparatus according to claim 6, wherein:

   the reference data is a learned model that is allowed to learn a correlation between the gradient and the shape of the spot at each gradient, and the measurement unit is configured to calculate an inclination of the measurement surface based on the learned model.

8. The measurement apparatus according to any one of claims 2 to 7, wherein:
the measurement light source unit is an optical comb light source.

9. The measurement apparatus according to any one of claims 1 to 8, wherein:
the shape of the spot is rectangular.

10. The measurement apparatus according to any one of claims 2 to 8, further comprising:
a luminosity setting unit configured to set a luminosity of the measurement light output from the measurement light source unit based on the inclination of the measurement surface or the scattered light reflected from the measurement surface.

11. A measurement method, comprising:

a guide light output step of outputting a guide light and continuously irradiate the guide light to a measurement surface of a plurality of measurement reference points, wherein the measurement reference point is one end of a distance between two points to the measurement surface;

an imaging step of imaging a spot of the guide light at the measurement surface of a first measurement reference point;

an inclination measurement step of calculating an inclination of the measurement surface based on a shape of the imaged spot, and based on the inclination, calculating a depth of a second measurement reference point corresponding to a next order of the first measurement reference point;

an imaging control step of adjusting a position of an imaging unit or its focal point position in such a manner that the depth is within a depth of field of the imaging unit;

a measurement light control step of allowing a measurement light source unit to move from the measurement reference point to a measurement start point based on the position of the imaging unit or its focal point position;

a measurement light output step of outputting a measurement light and irradiate the measurement light to the measurement surface;

a measurement light detection step of detecting a scattered light reflection component of the measurement light at the measurement surface; and

a distance measurement step of

continuously measuring a first distance, which is a distance from the measurement start point to a reflection point of the measurement light at the measurement surface, based on the scattered light reflection component, and calculating a measurement distance by adding the first distance and a second distance, which is a distance from the measurement reference point to the measurement start point, and thereby measure a shape of the measurement surface.

12. A program, wherein:
the program allows a computer to perform the measurement method according to claim 11.

【FIG. 1】

【FIG. 2】

SP

【FIG. 3】

【FIG. 4】

FIG. 4A

Y

X

FIG. 4B

MB

MB3  MB2  MB1

2

M

M

M

L

L

L

MS2

MS3

θy

MS1

MS

FIG. 4C

【FIG. 5】

FIG. 5A

FIG. 5B

FIG. 5C

【FIG. 6】

```
                    2                                    1  3

   ┌──────────────────────────────┬──────────────────────────────┐
   │  ┌────────────────────────┐  │  ┌────────────────────────┐   │
   │  │ MEASUREMENT UNIT       │  │  │  INFORMATION PROCESSING │   │
   │  │                        │  │  │       APPARATUS         │   │
21 │  │ ┌────────────────────┐ │  │  └────────────────────────┘   │
───┼──┤ │ GUIDE LIGHT SOURCE │ │  │                               │
   │  │ │       UNIT         │ │  │  ┌────────────────────────┐   │
   │  │ └────────────────────┘ │  │  │    DISPLAY APPARATUS   │───┼── 8
22 │  │ ┌────────────────────┐ │  │  └────────────────────────┘   │
───┼──┤ │ MEASUREMENT LIGHT  │ │  │                               │
   │  │ │   SOURCE UNIT      │ │  │                               │
   │  │ └────────────────────┘ │  │                               │
23 │  │ ┌────────────────────┐ │  │                               │
───┼──┤ │    IMAGING UNIT    │ │  │                               │
   │  │ └────────────────────┘ │  │                               │
24 │  │ ┌────────────────────┐ │  │                               │
───┼──┤ │ LIGHT DETECTION UNIT│ │  │                               │
241│  │ │ ┌────────────────┐  │ │  │                               │
───┼──┤ │ │ REFERENCE LIGHT│  │ │  │                               │
   │  │ │ │ DETECTION UNIT │  │ │  │                               │
242│  │ │ └────────────────┘  │ │  │                               │
───┼──┤ │ ┌────────────────┐  │ │  │                               │
   │  │ │ │  MEASUREMENT   │  │ │  │                               │
   │  │ │ │ LIGHT DETECTION│  │ │  │                               │
   │  │ │ │      UNIT      │  │ │  │                               │
   │  │ │ └────────────────┘  │ │  │                               │
25 │  │ └────────────────────┘ │  │                               │
───┼──┤ ┌────────────────────┐ │  │                               │
   │  │ │   BEAM SPLITTER    │ │  │                               │
   │  │ └────────────────────┘ │  │                               │
   │  └────────────────────────┘  │                               │
   └──────────────────────────────┴──────────────────────────────┘
```

【FIG. 7】

3

33　　　　　　　　　32

| CONTROLLER | STORAGE UNIT |

30

COMMUNICATION
UNIT

31

【FIG. 8】

33

CONTROLLER

| ACQUISITION UNIT | 331 |

| MEASUREMENT UNIT | 332 |

| IMAGING CONTROLLER | 333 |

| MODE SWITCHING UNIT | 334 |

| RESULT STORAGE UNIT | 335 |

| DISPLAY CONTROLLER | 336 |

【FIG. 9】

【FIG. 10】

【FIG. 11】

SP

$$f^{-1}(\theta_x, \theta_y)$$

SP7

SP8

A                   D

D'

A'

B                   C

C'

B'

【FIG. 12】

MEASUREMENT UNIT | INFORMATION PROCESSING APPARATUS

A01
SWITCH TO GUIDE LIGHT MODE

A02
OUTPUT GUIDE LIGHT

A03
CONFIRM WHETHER IT IS THE LAST MEASUREMENT REFERENCE POINT

YES

A14
STOP OUTPUTTING GUIDE LIGHT

NO

A04
MOVE TO MEASUREMENT REFERENCE POINT

A05
CONFIRM WHETHER IT IS THE FIRST MEASUREMENT REFERENCE POINT

YES

NO A06
READ DEPTH OF MEASUREMENT SURFACE

A08
IMAGING UNIT MOVES

A07
ADJUST IMAGING UNIT TO BE WITHIN DEPTH OF FIELD

A09
IMAGE SPOT SHAPE OF GUIDE LIGHT

A10
ACQUIRE IMAGE DATA OF SPOT SHAPE OF GUIDE LIGHT

A11
CALCULATE INCLINATION OF MEASUREMENT SURFACE OF MEASUREMENT REFERENCE POINT

A12
CALCULATE DEPTH FROM NEXT MEASUREMENT REFERENCE POINT TO MEASUREMENT SURFACE

A13
STORE INCLINATION AND DEPTH

26

【FIG. 13】

MEASUREMENT UNIT | INFORMATION PROCESSING APPARATUS

A21
SWITCH TO MEASUREMENT LIGHT MODE

A22
CONFIRM WHETHER IT IS THE LAST MEASUREMENT REFERENCE POINT

YES

NO

A23
MOVE TO MEASUREMENT REFERENCE POINT

A24
CONFIRM WHETHER IT IS THE FIRST MEASUREMENT REFERENCE POINT

YES

NO A25
READ DEPTH OF MEASUREMENT REFERENCE POINT

A27
MOVE TO MEASUREMENT START POINT

A26
CALCULATE MEASUREMENT START POINT

A28
OUTPUT MEASUREMENT LIGHT

A29
DETECT REFERENCE LIGHT AND MEASUREMENT LIGHT

A34
STOP OUTPUTTING MEASUREMENT LIGHT

A30
READ REFERENCE SIGNAL DATA AND MEASUREMENT SIGNAL DATA

A31
MEASURE DISTANCE FROM MEASUREMENT START POINT TO MEASUREMENT SURFACE

A32
ADD DISTANCE FROM MEASUREMENT REFERENCE POINT TO MEASUREMENT START POINT

A33
STORE DISTANCE FROM MEASUREMENT REFERENCE POINT TO MEASUREMENT POINT

【FIG. 14】

【FIG. 15】

【FIG. 16】

33

CONTROLLER

| ACQUISITION UNIT | 331 |
| MEASUREMENT UNIT | 332 |
| IMAGING CONTROLLER | 333 |
| MODE SWITCHING UNIT | 334 |
| RESULT STORAGE UNIT | 335 |
| DISPLAY CONTROLLER | 336 |
| LUMINOSITY SETTING UNIT | 337 |

【FIG. 17】

TL

| θy＼θx | ～10° | ～20° | ～30° | ～40° | ～50° | ～60° | ～70° |
|---|---|---|---|---|---|---|---|
| ～10° | 1.00 | 1.05 | 1.10 | 1.15 | 1.20 | 1.25 | 1.30 |
| ～20° | 1.05 | 1.10 | 1.21 | 1.27 | 1.32 | 1.38 | 1.43 |
| ～30° | 1.10 | 1.16 | 1.27 | 1.33 | 1.39 | 1.44 | 1.50 |
| ～40° | 1.15 | 1.21 | 1.33 | 1.39 | 1.45 | 1.51 | 1.57 |
| ～50° | 1.20 | 1.26 | 1.39 | 1.45 | 1.51 | 1.58 | 1.64 |
| ～60° | 1.25 | 1.31 | 1.44 | 1.51 | 1.58 | 1.64 | 1.71 |
| ～70° | 1.30 | 1.37 | 1.50 | 1.57 | 1.64 | 1.71 | 1.77 |

Form PCT/ISA/210 (second sheet) (January 2015)

**INTERNATIONAL SEARCH REPORT**

| International application No. |
| --- |
| PCT/JP2021/005742 |

A. CLASSIFICATION OF SUBJECT MATTER
G01B 11/24(2006.01)i; G01B 11/26(2006.01)i
FI: G01B11/24 Z; G01B11/26 H

According to International Patent Classification (IPC) or to both national classification and IPC

B. FIELDS SEARCHED

Minimum documentation searched (classification system followed by classification symbols)
G01B11/00-11/30

Documentation searched other than minimum documentation to the extent that such documents are included in the fields searched

| | |
| --- | --- |
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| Y | JP 2014-126381 A (NIKON CORP.) 07 July 2014 (2014-07-07) paragraphs [0014]-[0145], fig. 1-12 | 1-12 |
| Y | WO 2009/098803 A1 (DAINIPPON SCREEN MFG. CO., LTD.) 13 August 2009 (2009-08-13) paragraphs [0067]-[0070], fig. 4, 11-12 | 1-12 |
| Y | JP 2008-523353 A (ELECTRONIC SCRIPTING PRODUCTS, INC.) 03 July 2008 (2008-07-03) paragraphs [0048]-[0049], fig. 2, 4 | 1-12 |

☐ Further documents are listed in the continuation of Box C.    ☒ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 08 April 2021 (08.04.2021) | 27 April 2021 (27.04.2021) |

| Name and mailing address of the ISA/ | Authorized officer |
| --- | --- |
| Japan Patent Office | |
| 3-4-3, Kasumigaseki, Chiyoda-ku, | |
| Tokyo 100-8915, Japan | Telephone No. |

INTERNATIONAL SEARCH REPORT

Information on patent family members

International application No.

PCT/JP2021/005742

| Patent Documents referred in the Report | Publication Date | Patent Family | Publication Date |
|---|---|---|---|
| JP 2014-126381 A | 07 Jul. 2014 | (Family: none) | |
| WO 2009/098803 A1 | 13 Aug. 2009 | (Family: none) | |
| JP 2008-523353 A | 03 Jul. 2008 | US 2005/0195387 A1 paragraphs [0064]-[0065], fig. 2, 4 WO 2005/091837 A2 EP 1735588 A CA 2558732 A KR 10-2007-0007127 A CN 101523154 A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO H05231832 A